# EUROPEAN PATENT SPECIFICATION

(11) **EP 3 163 834 B1**
(45) Date of publication and mention of the grant of the patent: **06.05.2020**
(21) Application number: 16169945.9
(22) Date of filing: 17.05.2016
(51) Int. Cl.: H04W 84/12, H04L 29/06, H04W 12/06

(54) **METHOD AND DEVICE FOR EQUIPMENT CONTROL**
VERFAHREN UND VORRICHTUNG ZUR BENUTZERSTEUERUNG
PROCÉDÉ ET DISPOSITIF DE COMMANDE D'ÉQUIPEMENT

(30) Priority: 30.10.2015 CN 201510728203
(43) Date of publication of application: 03.05.2017
(73) Proprietor: Xiaomi Inc., Beijing 100085 (CN)
(72) Inventor: CHEN, Yong, Beijing 10085 (CN); XU, Yincheng, Beijing 10085 (CN); YANG, Guizhen, Beijing 10085 (CN); CHEN, Weiyang, Beijing 10085 (CN)
(74) Representative: Hughes, Andrea Michelle

(56) References cited:
- WO-A2-2014/096954
- US-A1- 2013 198 383
- US-A1- 2014 165 178

## Description

### TECHNICAL FIELD

The present disclosure generally relates to the technical field of computers, and more particularly, to a method and device for equipment control.

### BACKGROUND

When a Wireless Fidelity (WiFi) network is set, a user may usually set a password for the WiFi network to ensure security of the WiFi network, and a visitor is permitted to access the WiFi network only after inputting the password. The user may usually set an additional password-free visitor WiFi network to facilitate access of the visitor to the network, and after the visitor accesses the visitor WiFi network, the user hides the visitor WiFi network.
The embodiments of the present disclosure are presented to solve the problem that visitor equipment is required to input the password to acquire the predetermined using permission and the operation time of the visitor is long in the related art.

WO 2014/096954 relates to a method for connecting an electronic device to a wireless network provided by an access point. Both the electronic device and access point are associated respectively to a first and second identifier in a server hosting a social network. The social network is defined by a graph structure defining relationships between a plurality of nodes, each node corresponding to an identifier in the social network. The method includes receiving a connection request for connecting to the wireless network, the connection request including the first identifier, determining using the server hosting the social network if a portion of the graph structure defines a relationship between the nodes corresponding respectively to the first and second identifiers, and granting access to the wireless network based on the determining.

US 2013/0198383 discloses a method including receiving a request at a wireless access point from a client system to access a network through the wireless access point. The wireless access point sends an identifier associated with the client system to a social-networking system, the social-networking system including user profiles arranged in one or more social graphs. The social graphs store relationships between the user profiles. The method farther includes receiving at the wireless access point from the social-networking system an authorization determination. The authorization determination is based upon a first user profile of the plurality of user profiles. The first user profile includes the identifier associated with the client system. The method further includes providing the client system with access to the network through the wireless access point in accordance with the authorization determination.

US 2014/0165178 discloses that an authentication service running on a processing device receives a request from a local area network (LAN) to authenticate a computing device (and/or a user of the computing device) that has attempted to access the LAN, the request comprising a first identifier (ID) that uniquely identifies the computing device. The authentication service determines whether to authenticate the computing device based on the first ID, information from a third party data set, and an authentication criterion of the LAN. Responsive to determining that the information from the third party data set satisfies the authentication criterion, the authentication service notifies the LAN that the computing device is authenticated.

### SUMMARY

Accordingly, the present disclosure provides a method, system and device for equipment control.

According to a first aspect of the embodiments of the present disclosure, a method for equipment control is provided as defined in claim 1.

Optionally, the method may further include that:
an ID acquisition request sent by the visitor equipment is received, the ID acquisition request being sent when the visitor equipment receives a triggering signal acting on the starting link and the ID acquisition request being used to request for the first ID; and
the first ID is sent to the visitor equipment, the visitor equipment being configured to send the first ID and the second ID to the client and the client being configured to receive the first ID and the second ID and read the visitor account which logs in the client.

Optionally, the method may further include that:
when it is determined that the predetermined relationship is not satisfied between the visitor account and the manager account, at least one other visitor account of at least one other piece of visitor equipment currently having the predetermined using permission is acquired;
whether the predetermined relationship is satisfied between at least one other visitor account and the visitor account or not is detected; and
when the predetermined relationship is satisfied between at least one other visitor account and the visitor account, the visitor equipment is determined to have the predetermined using permission according to the first ID.

Optionally, the method may further include that:
when the predetermined relationship is not satisfied between any other visitor account and the visitor account, the visitor equipment is determined not to have the predetermined using permission according to the first ID.

According to a second aspect of the embodiments of the present disclosure, a method for equipment control is provided as defined by claim 5.

Optionally, the method may further include that:
when a triggering signal acting on the starting link is received, an ID acquisition request is sent to the control equipment;
the first ID sent by the control equipment is received; and
the first ID and the second ID are sent to the client, the client being configured to receive the first ID and the second ID and read the visitor account which logs in the client.

Optionally, the method may further include that:
the control equipment is determined to have the predetermined using permission, the control equipment being configured to acquire at least one other visitor account of at least one other piece of visitor equipment currently having the predetermined using permission when it is determined that the predetermined relationship is not satisfied between the visitor account and the manager account and determine that the visitor equipment has the predetermined using permission according to the first ID when it is determined that the predetermined relationship is satisfied between at least one other visitor account and the visitor account.

Optionally, the method may further include that:
the control equipment is determined not to have the predetermined using permission, the control equipment being configured to determine that the visitor equipment does not have the predetermined using permission according to the first ID when it is determined that the predetermined relationship is not satisfied between any other visitor account and the visitor account.

According to a third aspect of the embodiments of the present disclosure, a device for equipment control is provided as defined by claim 9.

According to a fourth aspect of the embodiments of the present disclosure, a device for equipment control is provided as defined by claim 10.

In one particular embodiment, the steps of the method for equipment control are determined by computer program instructions.

Consequently, the invention is also directed to a computer program for executing the steps of a method for equipment control as described above when this program is executed by a computer.
This program can use any programming language and take the form of source code, object code or a code intermediate between source code and object code, such as a partially compiled form, or any other desirable form.
The invention is also directed to a computer-readable information medium containing instructions of a computer program as described above.
The information medium can be any entity or device capable of storing the program. For example, the support can include storage means such as a ROM, for example a CD ROM or a microelectronic circuit ROM, or magnetic storage means, for example a diskette (floppy disk) or a hard disk.
Alternatively, the information medium can be an integrated circuit in which the program is incorporated, the circuit being adapted to execute the method in question or to be used in its execution.
The technical solutions provided by the embodiments of the present disclosure may achieve the following beneficial effects:
a first ID of visitor equipment, a visitor account, and a second ID of control equipment are received from a client; a manager account associated with the second ID is acquired; and when it is determined that a predetermined relationship is satisfied between the visitor account and the manager account, the visitor equipment is determined to have a predetermined using permission according to the first ID, so that the control equipment may verify an identity of a visitor according to the relationship between the visitor account which logs in the client and the manager account rather than verifying the identity of the visitor according to a password, the problem that the visitor equipment is required to input the password to acquire the predetermined using permission is solved, and an effect of saving operation time for the visitor to input the password is achieved.
In addition, a predetermined page used for reorientation is generated and sent to the visitor equipment through the control equipment, the predetermined page including the second ID and a starting link and the starting link being used to start the client, so that a user may acquire the predetermined using permission by one key by triggering the link, operation of acquiring the predetermined using permission is simplified, and acquisition efficiency for the using permission is improved.
Moreover, when the predetermined relationship is not satisfied between the visitor account and the manager account, whether the preset relationship is satisfied between the visitor account and other visitor account of other visitor equipment or not is detected, so that the control equipment may further verify the identity of the visitor according to said other visitor account, thereby avoiding the complexity in the operation of acquiring the predetermined using permission due to the fact that it is needed to make the visitor account and the manager account meet the predetermined relationship when the predetermined relationship is not satisfied between the visitor account and the manager account, and achieving an effect of simplifying a verification flow.
It is to be understood that the above general description and detailed description below are only exemplary and explanatory and not intended to limit the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for equipment control according to an exemplary embodiment.
Fig. 2 is a flow chart showing a method for equipment control according to another exemplary embodiment.
Fig. 3A is a system flow chart showing a method for equipment control according to an exemplary embodiment.
Fig. 3B is a system interaction diagram of a method for equipment control according to an exemplary embodiment.
Fig. 4 is a block diagram of a device for equipment control, according to an exemplary embodiment.
Fig. 5 is a block diagram of a device for equipment control according to an exemplary embodiment.
Fig. 6 is a block diagram of a device for equipment control according to an exemplary embodiment.
Fig. 7 is a block diagram of a device for equipment control according to an exemplary embodiment.
Fig. 8 is a block diagram of a device for equipment control according to an exemplary embodiment.
Fig. 9 is a block diagram of a device for equipment control according to an exemplary embodiment.

### DETAILED DESCRIPTION

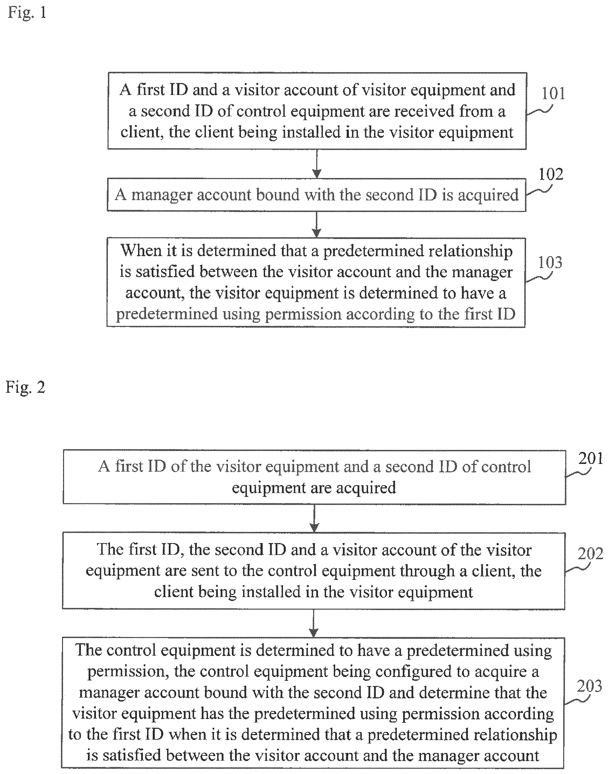

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments of the present disclosure. Instead, they are merely examples of apparatuses and methods consistent with aspects related to the embodiments of the present disclosure as recited in the appended claims. Fig. 1 is a flow chart showing a method for equipment control according to an exemplary embodiment. The method for equipment control is applied to control equipment, and as shown in Fig. 1, the method for equipment control includes the following steps:
Step 101: a first ID and a visitor account of visitor equipment and a second ID of control equipment are received from a client, the client being installed in the visitor equipment;
Step 102: a manager account associated with the second ID is acquired; and
Step 103: when it is determined that a predetermined relationship is satisfied between the visitor account and the manager account, the visitor equipment is determined to have a predetermined using permission according to the first ID.
From the above, according to the method for equipment control provided by the embodiment of the present disclosure, the first ID and the visitor account of the visitor equipment and the second ID of the control equipment are received from the client; the manager account associated with the second ID is acquired; and when it is determined that a predetermined relationship is satisfied between the visitor account and the manager account, the visitor equipment is determined to have the predetermined using permission according to the first ID, so that the control equipment may verify an identity of a visitor according to the relationship between the visitor account which logs in the client and the manager account rather than verifying the identity of the visitor according to a password, the problem that the visitor equipment is required to input the password to acquire the predetermined using permission is solved, and an effect of saving operation time for the visitor to input the password is achieved.
Fig. 2 is a flow chart showing a method for equipment control according to another exemplary embodiment. The method for equipment control is applied to visitor equipment, and as shown in Fig. 2, the method for equipment control includes the following steps:
Step 201: a first ID of visitor equipment and a second ID of control equipment are acquired;
Step 202: the first ID, the second ID and a visitor account of the visitor equipment are sent to the control equipment through a client, the client being installed in the visitor equipment; and
Step 203: the control equipment is determined to have a predetermined using permission, the control equipment being configured to acquire a manager account associated with the second ID and determine that the visitor equipment has the predetermined using permission according to the first ID when it is determined that a predetermined relationship is satisfied between the visitor account and the manager account.
From the above, according to the method for equipment control provided by the embodiment of the present disclosure, the first ID of the visitor equipment and the second ID of the control equipment are acquired; the first ID, the second ID and the visitor account of the visitor equipment are sent to the control equipment through the client, the client being installed in the visitor equipment; and the control equipment is determined to have the predetermined using permission, so that the control equipment may verify an identity of a visitor according to the relationship between the visitor account which logs in the client and the manager account rather than verifying the identity of the visitor according to a password, the problem that the visitor equipment is required to input the password to acquire the predetermined using permission is solved, and an effect of saving operation time for the visitor to input the password is achieved.

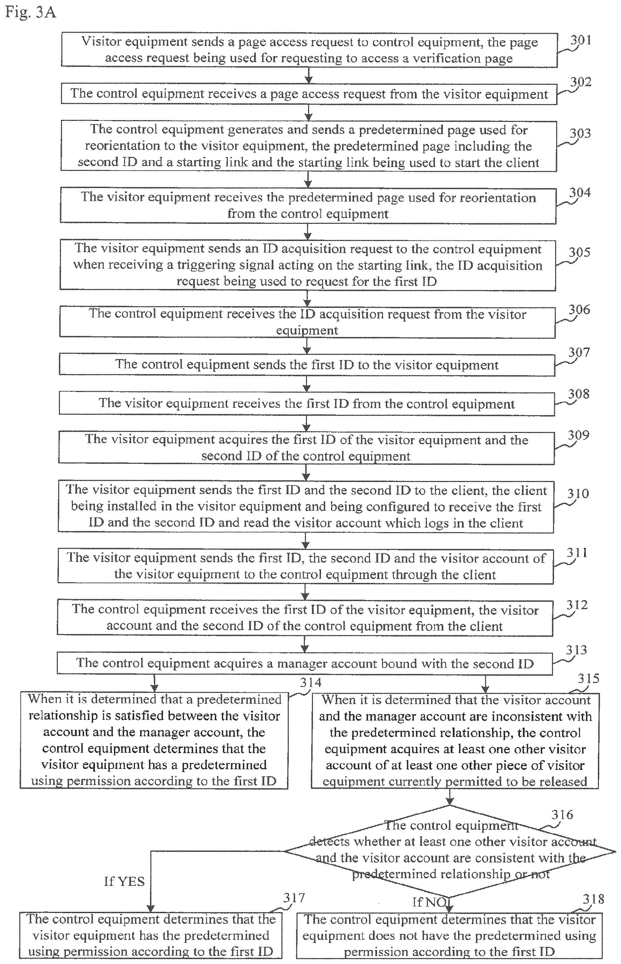

Fig. 3A is a flow chart showing a method for equipment control according to another exemplary embodiment. As shown in Fig. 3A, description is made by taking the case that having the predetermined using permission refers to releasing visitor equipment while not having the predetermined using permission refers to forbidding releasing of the visitor equipment as an example in the embodiment, and during practical implementation, the predetermined using permission is not limited in the embodiment. The method for equipment control includes the following steps. Step 301: visitor equipment sends a page access request to control equipment, the page access request being used for requesting to access a verification page.

In the embodiment, electronic equipment of a host is called manager equipment, electronic equipment of a visitor of the host is called visitor equipment, and the control equipment includes at least one of a router and a server.
The host may set a password-free visitor network according to a wireless network provided by the router, so that the visitor equipment may directly access the visitor network after finding the visitor network. The technology of setting a visitor network for a wireless networkis well-known, and will not be elaborated in the embodiment. The visitor equipment sends a page access request to the router to request to access a verification page after accessing the visitor network, the verification page being used to verify whether the visitor equipment is permitted to access the Internet or not. When a page returned according to the page access request is a predetermined verification page, it is determined that the router permits the visitor equipment to be released, and then the visitor equipment is permitted to access the Internet; and when the page returned according to the page access request is not the predetermined verification page, it is determined that the router forbids the visitor equipment from being released, and then the visitor equipment is not permitted to access the Internet. Step 302: the control equipment receives a page access request from the visitor equipment.
Here, when the control equipment includes a router and a server, the router receives the page access request, detects whether the visitor equipment is in a predetermined white list or not, returns the verification page to the visitor equipment when the visitor equipment is in the white list, otherwise, reorients the visitor equipment to a predetermined page when the visitor equipment is not in the white list, wherein the white list is used to indicate the visitor equipment which is permitted to be released by the router.
When the visitor equipment is reoriented to the predetermined page, the router generates a predetermined access request used to request for the predetermined page, acquires own second ID and sends the predetermined access request and the second ID to the server, wherein the second ID may be a Media Access Control (MAC) address, an ID and the like of the router, which is not limited in the embodiment.

The router is pre-bound with the server, and for example, when the router is a MI router, the server is a MI server.
Step 303: the control equipment generates and sends a predetermined page used for reorientation to the visitor equipment, the predetermined page including the second ID and a starting link and the starting link being used to start the client.
When the control equipment includes a router and a server and the server receives a predetermined access request from the router, the server is required to determine the client to be started by a visitor terminal, then generates the starting link used to start the client, generates a predetermined page including the starting link and the second ID and sends the predetermined page to the router. The client may be a client of a social network application, and the client is configured to provide a visitor account which logs in the visitor equipment for the server to determine a relationship between the visitor and the host according to the visitor account. For example, the client may be, but is not limited to, WeChat, MiTalk, micro-blog and the like.

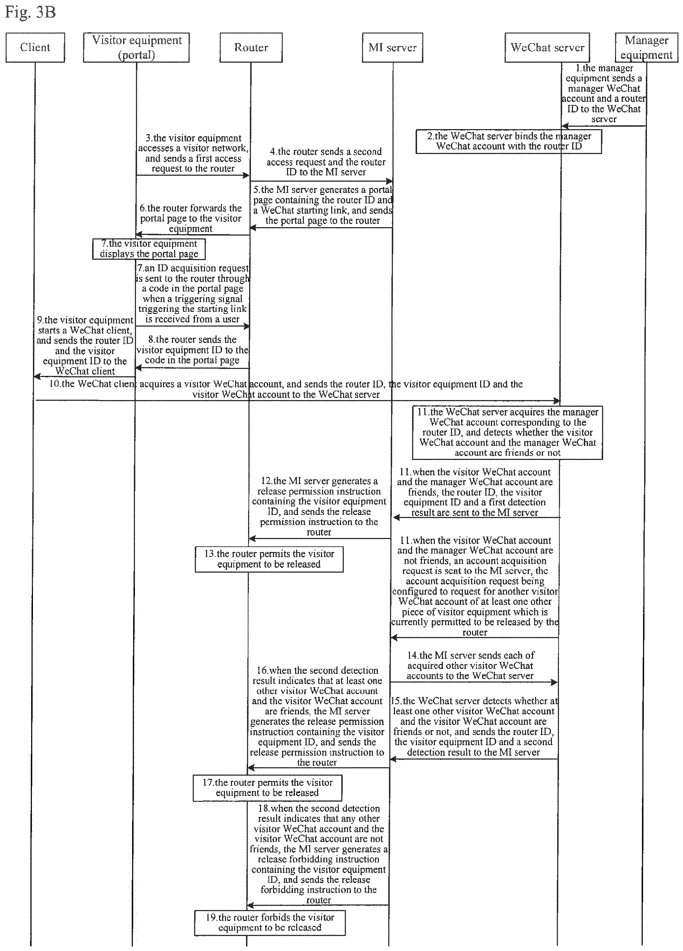

In the embodiment, a client type may be predetermined in the server, so that the server may generate a corresponding starting link according to the client type; or, when there are multiple client types, the server may also generate a starting link corresponding to each client type.
For example, when the client is a WeChat client, the starting link may be: one-key network accessing through WeChat; when the client is a MiTalk client, the starting link is: one-key network accessing through MiTalk; and when the client is a blog client, the starting link may be: one-key network accessing through micro-blog.
The server sends the predetermined page to the router after generating the predetermined page, and the router sends the predetermined page to the visitor equipment, the predetermined page including the second ID and the starting link and the starting link being used to start the client.
Step 304: the visitor equipment receives the predetermined page used for reorientation from the control equipment.
The control equipment in the step may be the router, and then the visitor equipment receives the predetermined page from the router.
Step 305: the visitor equipment sends an ID acquisition request to the control equipment when receiving a triggering signal acting on the starting link, the ID acquisition request being used to request for the first ID.
After the visitor equipment receives the predetermined page, if the visitor equipment determines that the predetermined page is different from a verification page, then the visitor equipment calls a browser to display the predetermined page. The predetermined page may be a portal page.
When the visitor equipment receives the triggering signal generated by clicking a starting link by a user, the visitor equipment acquires its own first ID from the control equipment, the first ID being sent to the control equipment when the visitor equipment accesses the visitor network. Or, optionally, the visitor equipment may directly read the first ID without acquiring the first ID from the control equipment when the visitor equipment may directly read the first ID from itself.
During implementation, a code may be set in a portal page, the code sends an ID acquisition request to the control equipment when the visitor equipment receives the triggering signal, the control equipment sends the first ID to the code after receiving the ID acquisition request, and then the visitor equipment acquires the first ID. Here, the control equipment in the step is the router.
Step 306: the control equipment receives the ID acquisition request from the visitor equipment.
The control equipment in the step may be a router, and the router receives the ID acquisition request sent by the visitor equipment.
Step 307: the control equipment sends the first ID to the visitor equipment.
The control equipment in the step is a router, and the router sends the first ID to the visitor equipment.
Step 308: the visitor equipment receives the first ID sent by the control equipment. The control equipment in the step may be a router, and the visitor equipment receives the first ID sent by the router.
Step 309: the visitor equipment acquires the first ID of the visitor equipment and the second ID of the control equipment.
Step 310: the visitor equipment sends the first ID and the second ID to the client, the client being installed in the visitor equipment and being configured to receive the first ID and the second ID and read the visitor account which logs in the client.
When the triggering signal is received, an execution sequence of the three steps of acquiring the first ID, acquiring the second ID and starting the client is an example only and is not limiting.
When the visitor account has logged in the client, the client directly reads the visitor account; and when there is no visitor account logged in the client, the client may prompt the user to input the visitor account, and then the client reads the visitor account.
For example, when the client is WeChat, the visitor account is a WeChat account; when the client is a MiTalk client, the visitor account is a MiTalk account; and when the client is a micro-blog client, the visitor account is a micro-blog account.
Step 311: the visitor equipment sends the first ID, the second ID and the visitor account of the visitor equipment to the control equipment through the client.
The control equipment in the step may be a server, and the visitor equipment sends the first ID, the second ID and the visitor account of the visitor equipment to the server through the client.
When the server in the embodiment is a cluster server, the client may directly send the first ID, the visitor account and the second ID to the server; and when the server in the embodiment is not a cluster server and the server corresponding to the client is different from the server associated with the router, the client is required to send the first ID, the visitor account and the second ID to the server corresponding to the client. In order to facilitate description, the server corresponding to the client is called as a first server and the server associated with the router is called a second server hereinafter.
For example, when the second server is a Mi server and the client is a MiTalk client, the first ID, the MiTalk account and the second ID may be sent to the Mi server, that is, the first server is the Mi server; and when the second server is a Mi server and the client is a WeChat client, the first ID, the WeChat account and the second ID are sent to a WeChat server, that is, the first server is the WeChat server.
Step 312: the control equipment receives the first ID and the visitor account of the visitor equipment and the second ID of the control equipment from the client.
The control equipment in the step may be a server, and the server receives the first ID and the visitor account of the visitor equipment and the second ID of the control equipment from the client.
Step 313: the control equipment acquires a manager account associated with the second ID.
The control equipment in the step may be a server.
The manager equipment may acquire the second ID of the server after accessing the router, and send the manager account which logs in the client and the second ID to the server, and the server associates the manager account with the second ID.
When receiving the second ID and the visitor account, the server acquires the manager account assocaited with the second ID, and detects whether a predetermined relationship is satisfied between the visitor account and the manager account or not. Here, the predetermined relationship may be preset and modified, and for example, the predetermined relationship refers to that the visitor account and the manager account are friends, or the visitor account and the manager account belong to the same group and the like, and the embodiment is not limited in this respect.
Step 314: when it is determined that a predetermined relationship is satisfied between the visitor account and the manager account, the control equipment determines that the visitor equipment has a predetermined using permission according to the first ID. The control equipment in the step may include a router and a server.
When the predetermined relationship is satisfied between the visitor account and the manager account, it is indicated that the host and the visitor know each other, and then the visitor equipment is determined to have the predetermined using permission. That is, the visitor equipment may be permitted to access the Internet.
During implementation, when the server is not a cluster server and the first server determines that the predetermined relationship is satisfied between the visitor account and the manager account, the result and the first ID are sent to the second server, and the second server generates a release permission instruction containing the first ID according to a querying result, and sends the release permission instruction to the router. When the server is a cluster server, the server generates the release permission instruction containing the first ID according to the querying result after obtaining the result, and sends the release permission instruction to the router, the router releases the visitor equipment according to the release permission instruction, the visitor equipment normally accesses the Internet after being determined to be released by the control equipment, and the flow ends.
The first server may also acquire and send information such as a nickname and a head portrait of the visitor account to the second server, which is nota necessary limitation. The router may also add the first ID into a white list.
Step 315: when it is determined that the predetermined relationship is not satisfied between the visitor account and the manager account, the control equipment acquires at least one other visitor account of at least one other piece of visitor equipment currently permitted to be released.
The control equipment in the step may include a router and a server.
When there still exists other visitor equipment accessing the router and the router permits said other visitor equipment to be released, the server may receive another visitor account of said other visitor equipment before releasing said other visitor equipment, so that whether the visitor equipment is permitted to be released or not may be determined according to a relationship between said other visitor account and the visitor account.
During implementation, when the server is not a cluster server, the first server sends an account acquisition request containing the second ID to the second server, and the second server finds another visitor account of each of other pieces of visitor equipment which is permitted to be released according to the second ID, and sends each of the other visitor accounts to the first server. When the server is a cluster server, the server directly finds said other visitor account of each of other pieces of visitor equipment which is permitted to be released according to the second ID.
Step 316: the control equipment detects whether the predetermined relationship is satisfied between at least one other visitor account and the visitor account or not, Step 317 is executed when the predetermined relationship is satisfied between at least one other visitor account and the visitor account, and Step 318 is executed when the predetermined relationship is not satisfied between any other visitor account and the visitor account.
The server detects whether the predetermined relationship is satisfied between a certain other visitor account and the visitor account or not, and when the predetermined relationship is satisfied between the certain other visitor account and the visitor account, it is indicated that the visitor and other visitor know each other, the visitor equipment may be permitted to access the Internet and Step 317 is executed; and when the predetermined relationship is not satisfied between the certain other visitor account and the visitor account, whether the predetermined relationship is satisfied between next other visitor account and the visitor account or not is continuously detected. Here, the predetermined relationship in the step may be the same as the predetermined relationship in Step 314, or may also be different, which is not a limitation of the embodiment.
Step 317: the control equipment determines that the visitor equipment has the predetermined using permission according to the first ID.
Here, details about how the control equipment releases the visitor equipment according to the first ID are as described in Step 314, and will not be elaborated herein.
Step 318: the control equipment determines that the visitor equipment does not have the predetermined using permission according to the first ID.
The control equipment in the step may include a router and a server.
When the predetermined relationship is not satisfied between any other visitor account and the manager account, it is indicated that the host and the visitor do not know each other, and the visitor equipment is determined not to have the predetermined using permission. That is, the visitor equipment is forbidden from accessing the Internet.
During implementation, when the server is not a cluster server and the first server determines that the predetermined relationship is not satisfied between the visitor account and the manager account, the result and the first ID are sent to the second server, and the second server generates a release forbidding instruction containing the first ID according to a querying result, and sends the release forbidding instruction to the router. When the server is a cluster server, the server generates a release forbidding instruction containing the first ID according to the querying result after obtaining the result, and sends the release forbidding instruction to the router.
The router forbids the visitor equipment to be released according to the release forbidding instruction, and the visitor equipment is determined to be forbidden from being released by the control equipment, and is not permitted to access the Internet. In order to facilitate understanding, referring to a flow chart showing a method for equipment control shown in Fig. 3B, an embodiment is described taking the case that a client is a WeChat client, a first server is a WeChat server and a second server is a MI server as an example, wherein a router, the MI server and the WeChat server are in control equipment; and the client is in visitor equipment, and an implementation flow is as follows:
Step 1: manager equipment sends a manager WeChat account and a router ID to the WeChat server;
Step 2: the WeChat server binds the manager WeChat account with the router ID; Step 3: the visitor equipment accesses a visitor network, and sends a first access request to the router, the first access request being used to request to access a verification page;
Step 4: the router sends a second access request and the router ID to the MI server; Step 5: the MI server generates a portal page containing the router ID and a WeChat starting link, and sends the portal page to the router;
Step 6: the router forwards the portal page to the visitor equipment;
Step 7: the visitor equipment displays the portal page, and sends an ID acquisition request to the router through a code in the portal page when receiving from a user a triggering signal of triggering the starting link, the ID acquisition request being used to request for a visitor equipment ID of the visitor equipment;
Step 8: the router sends the visitor equipment ID to the code in the portal page;
Step 9: the visitor equipment starts the WeChat client, and sends the router ID and the visitor equipment ID to the WeChat client;
Step 10: the WeChat client acquires a visitor WeChat account, and sends the router ID, the visitor equipment ID and the visitor WeChat account to the WeChat server;
Step 11: the WeChat server acquires the manager WeChat account corresponding to the router ID, and detects whether the visitor WeChat account and the manager WeChat account are friends or not, and when the visitor WeChat account and the manager WeChat account are friends, the router ID, the visitor equipment ID and a first detection result are sent to the MI server and Step 12 is executed, and otherwise, when the visitor WeChat account and the manager WeChat account are not friends, an account acquisition request is sent to the MI server, the account acquisition request being used to request for at least one other visitor WeChat account of at least one other piece of visitor equipment which is currently permitted to be released by the router, and Step 14 is executed;
Step 12: the MI server generates a release permission instruction containing the visitor equipment ID, and sends the release permission instruction to the router;
Step 13: the router permits the visitor equipment to be released, and the flow is ended; Step 14: the MI server sends each of acquired other visitor WeChat accounts to the WeChat server;
Step 15: the WeChat server detects whether at least one other visitor WeChat account and the visitor WeChat account are friends or not, and sends the router ID, the visitor equipment ID and a second detection result to the MI server;
Step 16: when the second detection result indicates that at least one other visitor WeChat account and the visitor WeChat account are friends, the MI server generates a release permission instruction containing the visitor equipment ID, and sends the release permission instruction to the router;
Step 17: the router permits the visitor equipment to be released, and the flow is ended; Step 18: when the second detection result indicates that any other visitor WeChat account and the visitor WeChat account are not friends, the MI server generates a release forbidding instruction containing the visitor equipment ID, and sends the release forbidding instruction to the router; and
Step 19: the router forbids the visitor equipment to be released, and the flow is ended. From the above, according to the method for equipment control provided by the present disclosure, the first ID and the visitor account of the visitor equipment and the second ID of the control equipment are received from the client; the manager account associated with the second ID is acquired; and when it is determined that a predetermined relationship is satisfied between the visitor account and the manager account, the visitor equipment is determined to have the predetermined using permission according to the first ID, so that the control equipment may verify an identity of a visitor according to the relationship between the visitor account which logs in the client and the manager account rather than verifying the identity of the visitor according to a password, the problem that the visitor equipment is required to input the password to acquire the predetermined using permission is solved, and an effect of saving operation time for the visitor to input the password is achieved.
In addition, the predetermined page used for reorientation is generated and sent to the visitor equipment through the control equipment, the predetermined page including the second ID and a starting link and the starting link being used to start the client, so that a user may acquire the predetermined using permission by one key by triggering the link, operation of acquiring the predetermined using permission is simplified, and acquisition efficiency for the using permission is improved.
Moreover, when the predetermined relationship is not satisfied between the visitor account and the manager account, whether the predetermined relationship is satisfied between the visitor account and other visitor account of other visitor equipment or not is detected, so that the control equipment may further verify the identity of the visitor according to said other visitor account, thereby avoiding complexity in the operation of acquiring the predetermined using permission due to the fact that it is needed to make the visitor account and the manager account consistent with the predetermined relationship when the predetermined relationship is not satisfied between the visitor account and the manager account, and achieving an effect of simplifying a verification flow.

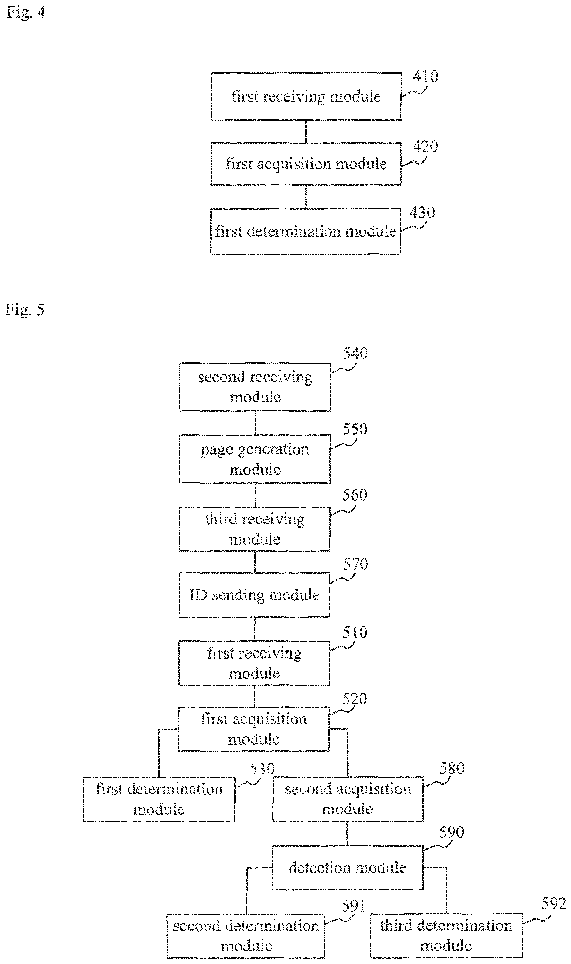

Fig. 4 is a block diagram of a device for equipment control according to an exemplary embodiment. The device is applied to control equipment, and as shown in Fig. 4, the device for equipment control includes: a first receiving module 410, a first acquisition module 420 and a first determination module 430.
The first receiving module 410 is configured to receive a first ID and a visitor account of visitor equipment and a second ID of the control equipment from a client, the client being installed in the visitor equipment;
the first acquisition module 420 is configured to acquire a manager account associated with the second ID received by the first receiving module 410; and
the first determination module 430 is configured to, when it is determined that a predetermined relationship is satisfied between the visitor account and the manager account acquired by the first acquisition module 420, determine that the visitor equipment has a predetermined using permission according to the first ID.
From the above, according to the device for equipment control provided by the embodiments of the present disclosure, the first ID and the visitor account of the visitor equipment and the second ID of the control equipment are received from the client; the manager account bound with the second ID is acquired; and when it is determined that a predetermined relationship is satisfied between the visitor account and the manager account, the visitor equipment is determined to have the predetermined using permission according to the first ID, so that the control equipment may verify an identity of a visitor according to the relationship between the visitor account which logs in the client and the manager account rather than verifying the identity of the visitor according to a password, the problem that the visitor equipment is required to input the password to acquire the predetermined using permission is solved, and an effect of saving operation time for the visitor to input the password is achieved.
Fig. 5 is a block diagram of a device for equipment control according to an exemplary embodiment. The device is applied to control equipment, and as shown in Fig. 5, the device for equipment control includes: a first receiving module 510, a first acquisition module 520 and a first determination module 530.
The first receiving module 510 is configured to receive a first ID and a visitor account of visitor equipment and a second ID of the control equipment from a client, the client being installed in the visitor equipment;
the first acquisition module 520 is configured to acquire a manager account associated with the second ID received by the first receiving module 510; and
the first determination module 530 is configured to, when it is determined that a predetermined relationship is satisfied between the visitor account and the manager account acquired by the first acquisition module 520, determine that the visitor equipment has a predetermined using permission according to the first ID.
Optionally, the device further includes a second receiving module 540 and a page generation module 550.
The second receiving module 540 is configured to receive a page access request from the visitor equipment, the page access request being used for requesting to access a verification page; and
the page generation module 550 is configured to generate and send a predetermined page used for reorientation to the visitor equipment, the predetermined page including the second ID and a starting link and the starting link being used to start the client. Optionally, the device further includes a third receiving module 560 and an ID sending module 570.
The third receiving module 560 receives an ID acquisition request from the visitor equipment, the ID acquisition request being sent when the visitor equipment receives a triggering signal acting on the starting link and the ID acquisition request being used to request for the first ID; and
the ID sending module 570 is configured to send the first ID to the visitor equipment, the visitor equipment being used to send the first ID and the second ID to the client and the client being configured to receive the first ID and the second ID and read the visitor account which logs in the client.
Optionally, the device further includes a second acquisition module 580, a detection module 590 and a second determination module 591.
The second acquisition module 580 is configured to, when it is determined that the predetermined relationship is not satisfied between the visitor account and the manager account, acquire at least one other visitor account of at least one other piece of visitor equipment currently having the predetermined using permission;
the detection module 590 is configured to detect whether the predetermined relationship is satisfied between at least one other visitor account acquired by the second acquisition module 580 and the visitor account or not; and
the second determination module 591 is further configured to, when a detection result of the detection module 590 indicates that the predetermined relationship is satisfied between at least one other visitor account and the visitor account, determine that the visitor equipment has the predetermined using permission according to the first ID.
Optionally, the device further includes a third determination module 592.
The third determination module 592 is configured to, when the detection result of the detection module 590 indicates that the predetermined relationship is not satisfied between any other visitor account and the visitor account, determine that the visitor equipment does not have the predetermined using permission according to the first ID.
From the above, according to the device for equipment control provided by the embodiment of the present disclosure, the first ID and the visitor account of the visitor equipment and the second ID of the control equipment are received from the client; the manager account associated with the second ID is acquired; and when it is determined that a predetermined relationship is satisfied between the visitor account and the manager account, the visitor equipment is determined to have the predetermined using permission according to the first ID, so that the control equipment may verify an identity of a visitor according to the relationship between the visitor account which logs in the client and the manager account rather than verifying the identity of the visitor according to a password, the problem that the visitor equipment is required to input the password to acquire the predetermined using permission is solved, and an effect of saving operation time for the visitor to input the password is achieved.
In addition, the predetermined page used for reorientation is generated and sent to the visitor equipment through the control equipment, the predetermined page including the second ID and a starting link and the starting link being used to start the client, so that a user may acquire the predetermined using permission by one key by triggering the link, operation of acquiring the predetermined using permission is simplified, and acquisition efficiency for the using permission is improved.
Moreover, when the predetermined relationship is not satisfied between the visitor account and the manager account, whether the predetermined relationship is satisfied between the visitor account and other visitor account of other visitor equipment or not is detected, so that the control equipment may further verify the identity of the visitor according to said other visitor account, the problem of complexity in the operation of acquiring the predetermined using permission due to the fact that it is needed to make the visitor account and the manager account consistent with the predetermined relationship when the predetermined relationship is not satisfied between the visitor account and the manager account is solved, and an effect of simplifying a verification flow is achieved.

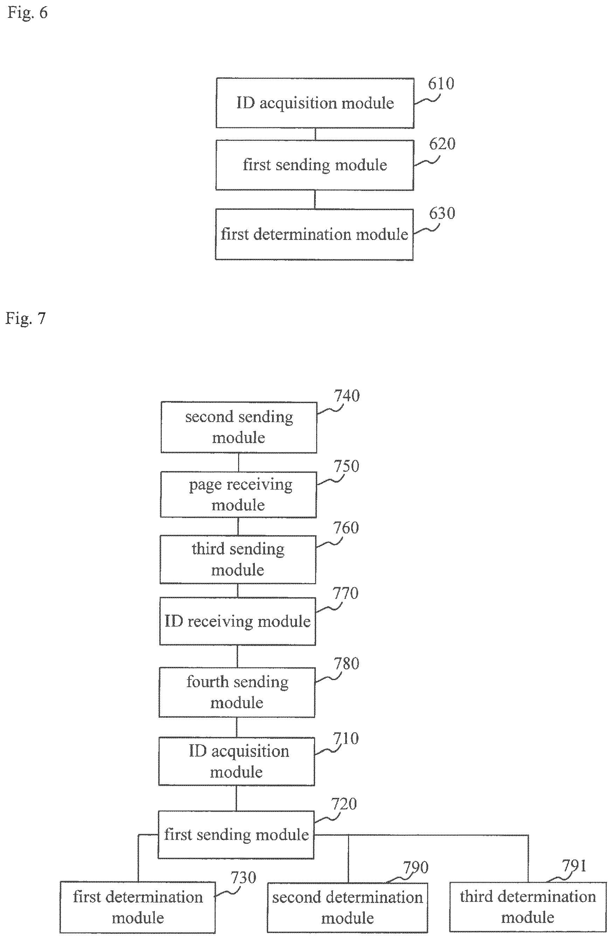

Fig. 6 is a block diagram of a device for equipment control according to an exemplary embodiment. The device is applied to visitor equipment, and as shown in Fig. 6, the device for equipment control includes an ID acquisition module 610, a first sending module 620 and a first determination module 630.
The ID acquisition module 610 is configured to acquire a first ID of the visitor equipment and a second ID of control equipment;
the first sending module 620 is configured to send the first ID and the second ID which are acquired by the ID acquisition module 610 and a visitor account of the visitor equipment to the control equipment through a client, the client being installed in the visitor equipment; and
the first determination module 630 is configured to determine that the control equipment has a predetermined using permission, the control equipment being configured to acquire a manager account associated with the second ID and determine that the visitor equipment has the predetermined using permission according to the first ID when it is determined that a predetermined relationship is satisfied between the visitor account and the manager account.
From the above, according to the device for equipment control provided by the embodiment of the present disclosure, the first ID of the visitor equipment and the second ID of the control equipment are acquired; the first ID, the second ID and the visitor account of the visitor equipment are sent to the control equipment through the client, the client being installed in the visitor equipment; and the control equipment is determined to have the predetermined using permission, so that the control equipment may verify an identity of a visitor according to the relationship between the visitor account which logs in the client and the manager account rather than verifying the identity of the visitor according to a password, the problem that the visitor equipment is required to input the password to acquire the predetermined using permission is solved, and an effect of saving operation time for the visitor to input the password is achieved.
Fig. 7 is a block diagram of a device for equipment control according to an exemplary embodiment. The device is applied to visitor equipment, and as shown in Fig. 7, the device for equipment control includes an ID acquisition module 710, a first sending module 720 and a first determination module 730.
The ID acquisition module 710 is configured to acquire a first ID of the visitor equipment and a second ID of control equipment;
the first sending module 720 is configured to send the first ID and the second ID which are acquired by the ID acquisition module 710 and a visitor account of the visitor equipment to the control equipment through a client, the client being installed in the visitor equipment; and
the first determination module 730 is configured to determine that the control equipment has a predetermined using permission, the control equipment being configured to acquire a manager account associated with the second ID and determine that the visitor equipment has the predetermined using permission according to the first ID when it is determined that a predetermined relationship is satisfied between the visitor account and the manager account.
Optionally, the device further includes a second sending module 740 and a page receiving module 750.
The second sending module 740 is configured to send a page access request to the control equipment, the page access request being used for requesting to access a verification page; and
the page receiving module 750 is configured to receive a predetermined page used for reorientation from the control equipment, the predetermined page including the second ID and a starting link and the starting link being used to start the client. Optionally, the device further includes a third sending module 760, an ID receiving module 770 and a fourth sending module 780.
The third sending module 760 is configured to, when a triggering signal acting on the starting link is received, send an ID acquisition request to the control equipment;
the ID receiving module 770 is configured to receive the first ID from the control equipment; and
the fourth sending module 780 is configured to send the first ID and second ID which are received by the ID receiving module 770 to the client, the client being configured to receive the first ID and the second ID and read the visitor account which logs in the client.
Optionally, the device further includes a second determination module 790.
The second determination module 790 is configured to determine that the control equipment has the predetermined using permission, the control equipment being configured to acquire at least one other visitor account of at least one other piece of visitor equipment currently having the predetermined using permission when it is determined that the predetermined relationship is not satisfied between the visitor account and the manager account and determine that the visitor equipment has the predetermined using permission according to the first ID when it is determined that the predetermined relationship is satisfied between at least one other visitor account and the visitor account.
Optionally, the device further includes a third determination module 791.
The third determination module 791 is configured to determine that the control equipment does not have the predetermined using permission, the control equipment being configured to determine that the visitor equipment does not have the predetermined using permission according to the first ID when it is determined that the predetermined relationship is not satisfied between any other visitor account and the visitor account.
From the above, according to the device for equipment control provided by the embodiment of the present disclosure, the first ID of the visitor equipment and the second ID of the control equipment are acquired; the first ID, the second ID and the visitor account of the visitor equipment are sent to the control equipment through the client; and the control equipment is determined to have the predetermined using permission, so that the control equipment may verify an identity of a visitor according to the relationship between the visitor account which logs in the client and the manager account rather than verifying the identity of the visitor according to a password, the problem that the visitor equipment is required to input the password to acquire the predetermined using permission is solved, and an effect of saving operation time for the visitor to input the password is achieved.
In addition, the predetermined page used for reorientation is generated and sent to the visitor equipment through the control equipment, the predetermined page including the second ID and a starting link and the starting link being used to start the client, so that a user may acquire the predetermined using permission by one key by triggering the link, operation of acquiring the predetermined using permission is simplified, and acquisition efficiency for the using permission is improved.
Moreover, when the predetermined relationship is not satisfied between the visitor account and the manager account, whether the predetermined relationship is satisfied between the visitor account and other visitor account of other visitor equipment or not is detected, so that the control equipment may further verify the identity of the visitor according to said other visitor account, the problem of complexity in the operation of acquiring the predetermined using permission due to the fact that it is needed to make the visitor account and the manager account consistent with the predetermined relationship when the predetermined relationship is not satisfied between the visitor account and the manager account is solved, and an effect of simplifying a verification flow is achieved.
An exemplary embodiment of the present disclosure provides a device for equipment control, which is applied to control equipment and may implement the method for equipment control provided by the present disclosure, the device for equipment control including a processor and a memory configured to store an instruction executable by the processor;
wherein the processor is configured to:
receive a first ID and a visitor account of visitor equipment and a second ID of the control equipment from a client, the client being installed in the visitor equipment;
acquire a manager account associated with the second ID; and
when it is determined that a predetermined relationship is satisfied between the visitor account and the manager account, determine that the visitor equipment has a predetermined using permission according to the first ID.
An exemplary embodiment of the present disclosure provides a device for equipment control, which is applied to visitor equipment and may implement the method for equipment control provided by the present disclosure, the device for equipment control including a processor and a memory configured to store an instruction executable by the processor;
wherein the processor is configured to:
acquire a first ID of the visitor equipment and a second ID of control equipment;
send the first ID, the second ID and a visitor account of the visitor equipment to the control equipment through a client, the client being installed in the visitor equipment; and
determine that the control equipment has a predetermined using permission, the control equipment being configured to acquire a manager account associated with the second ID and determine that the visitor equipment has the predetermined using permission according to the first ID when it is determined that a predetermined relationship is satisfied between the visitor account and the manager account.

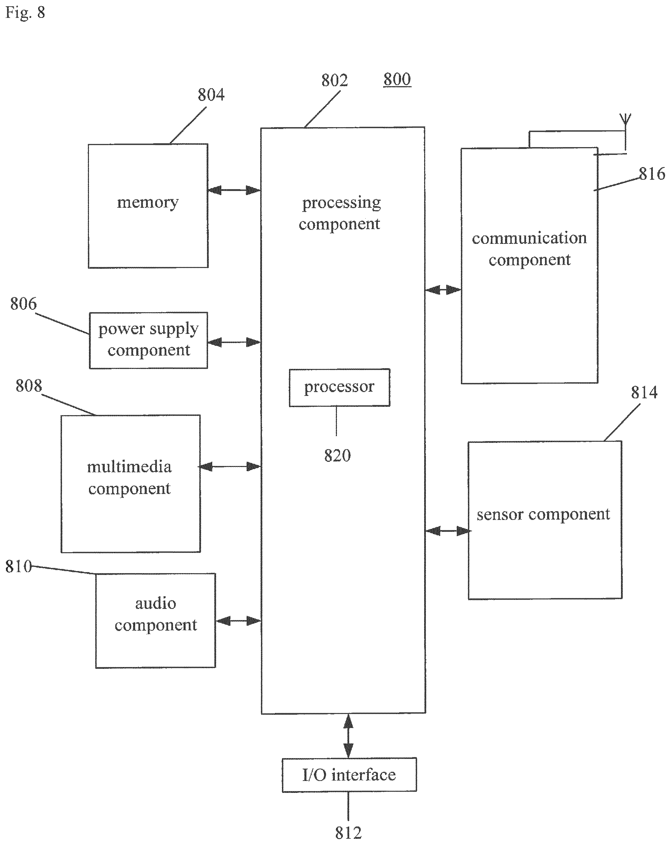

Fig. 8 is a block diagram of a device for equipment control 800 according to an exemplary embodiment. For example, the device 800 may be a mobile phone, a computer, a digital broadcast terminal, a messaging device, a gaming console, a tablet device, a medical device, fitness equipment, a personal digital assistant and the like.
Referring to Fig. 8, the device 800 may include one or more of the following components: a processing component 802, a memory 804, a power component 806, a multimedia component 808, an audio component 810, an Input/Output (I/O) interface 812, a sensor component 814, and a communication component 816.
The processing component 802 typically controls overall operations of the device 800, such as the operations associated with display, telephone calls, data communications, camera operations, and recording operations. The processing component 802 may include one or more processors 820 to execute instructions to perform all or part of the steps in the abovementioned methods. Moreover, the processing component 802 may include one or more modules which facilitate interaction between the processing component 802 and the other components. For instance, the processing component 802 may include a multimedia module to facilitate interaction between the multimedia component 808 and the processing component 802.
The memory 804 is configured to store various types of data to support the operation of the device 800. Examples of such data include instructions for any applications or methods operated on the device 800, contact data, phonebook data, messages, pictures, video, etc. The memory 804 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.
The power component 806 provides power for various components of the device 800. The power component 806 may include a power management system, one or more power supplies, and other components associated with the generation, management and distribution of power for the device 800.
The multimedia component 808 includes a screen providing an output interface between the device 800 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 808 includes a front camera and/or a rear camera. The front camera and/or the rear camera may receive external multimedia data when the device 800 is in an operation mode, such as a photographing mode or a video mode. Each of the front camera and the rear camera may be a fixed optical lens system or have focusing and optical zooming capabilities. The audio component 810 is configured to output and/or input an audio signal. For example, the audio component 810 includes a microphone (MIC), and the MIC is configured to receive an external audio signal when the device 800 is in the operation mode, such as a call mode, a recording mode and a voice recognition mode. The received audio signal may be further stored in the memory 804 or sent through the communication component 816. In some embodiments, the audio component 810 further includes a speaker configured to output the audio signal.
The I/O interface 812 provides an interface between the processing component 802 and peripheral interface modules, such as a keyboard, a click wheel, a button and the like. The button may include, but is not limited to: a home button, a volume button, a starting button and a locking button.

The sensor component 814 includes one or more sensors configured to provide status assessment in various aspects of the device 800. For instance, the sensor component 814 may detect an open/closed status of the device 800 and relative positioning of components, such as the display and the keypad, of the device 800, and the sensor component 814 may further detect a change in position of the device 800 or a component of the device 800, a presence or absence of contact between the user and the device 800, an orientation or an acceleration/deceleration of the device 800 and a change in temperature of the device 800. The sensor component 814 may include a proximity sensor configured to detect presence of an nearby object without any physical contact. The sensor component 814 may also include a light sensor, such as a Complementary Metal Oxide Semiconductor (CMOS) or Charge Coupled Device (CCD) image sensor, configured for use in an imaging application. In some embodiments, the sensor component 814 may also include an acceleration sensor, a gyroscope sensor, a magnetic sensor, a pressure sensor or a temperature sensor.
The communication component 816 is configured to facilitate wired or wireless communication between the device 800 and another device. The device 800 may access a wireless network based on a communication standard, such as WiFi, 2nd-Generation (2G) or 3rd-Generation (3G), or a combination thereof. In an exemplary embodiment, the communication component 816 receives a broadcast signal or broadcast associated information from an external broadcast management system through a broadcast channel. In an exemplary embodiment, the communication component 816 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BT technology and another technology.
In an exemplary embodiment, the device 800 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned methods.
In an exemplary embodiment, there is also provided a non-transitory computer-readable storage medium including an instruction, such as the memory 804 including an instruction, and the instruction may be executed by the processor 820 of the device 800 to implement the abovementioned methods. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

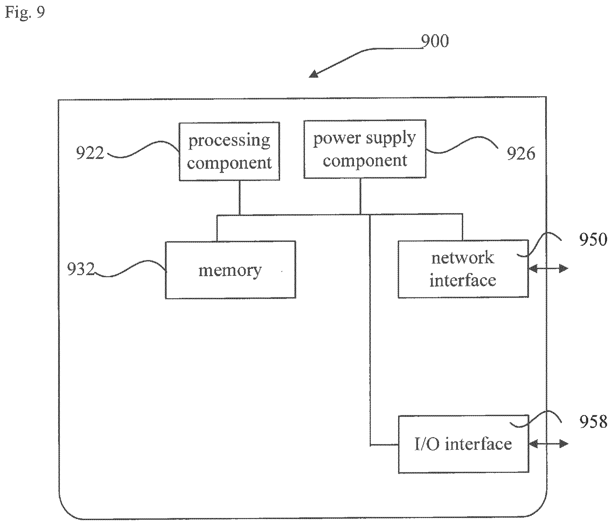

Fig. 9 is a block diagram of a device for equipment control 900 according to an exemplary embodiment. For example, the device 900 may be a server. Referring to Fig. 9, the device 900 includes a processing component 922 which further includes one or more processors, and a memory resource represented by a memory 932 configured to store instructions such as application programs executable for the processing component 922. The application programs stored in the memory 932 may include one or more than one module. Each module may include a set of instructions. In addition, the processing component 922 is configured to execute the instructions to execute the abovementioned method for equipment controls.
The device 900 may further include a power component 926 configured to execute power mangement of the device 900, a wired or wireless network interface 950 configured to connect the device 900 to a network, and an I/O interface 958. The device 900 may be operated on the basis of an operating system stored in the memory 932, such as Windows ServerTM, Mac OS XTM, UnixTM, LinuxTM or FreeBSDTM.
Other embodiments of the present disclosure will be apparent to those skilled in the art from consideration of the specification and practice of the embodiments of the present disclosure disclosed here. This application is intended to cover any variations, uses, or adaptations of the embodiments of the present disclosure following the general principles thereof and including such departures from the embodiments of the present disclosure as come within known or customary practice in the art. It is intended that the specification and examples be considered as exemplary only, with a true scope of the embodiments of the present disclosure being indicated by the following claims.
It will be appreciated that the embodiments of the present disclosure are not limited to the exact construction that has been described above and illustrated in the accompanying drawings, and that various modifications and changes may be made without departing from the scope thereof. It is intended that the scope of the embodiments of the present disclosure only be limited by the appended claims.

### INDUSTRY APPLICABILITY

According to the technical solutions provided by the embodiments of the present disclosure, a first ID of visitor equipment, a visitor account, and a second ID of control equipment are received from a client; a manager account associated with the second ID is acquired; and when it is determined that a predetermined relationship is satisfied between the visitor account and the manager account, the visitor equipment is determined to have a predetermined using permission according to the first ID, so that the control equipment may verify an identity of a visitor according to the relationship between the visitor account which logs in the client and the manager account rather than verifying the identity of the visitor according to a password, the problem that the visitor equipment is required to input the password to acquire the predetermined using permission is solved, and an effect of saving operation time for the visitor to input the password is achieved.
In addition, a predetermined page used for reorientation is generated and sent to the visitor equipment through the control equipment, the predetermined page including the second ID and a starting link and the starting link being used to start the client, so that a user may acquire the predetermined using permission by one key by triggering the link, operation of acquiring the predetermined using permission is simplified, and acquisition efficiency for the using permission is improved.
Moreover, when the predetermined relationship is not satisfied between the visitor account and the manager account, whether the preset relationship is satisfied between the visitor account and other visitor account of other visitor equipment or not is detected, so that the control equipment may further verify the identity of the visitor according to said other visitor account, thereby avoiding the complexity in the operation of acquiring the predetermined using permission due to the fact that it is needed to make the visitor account and the manager account meet the predetermined relationship when the predetermined relationship is not satisfied between the visitor account and the manager account, and achieving an effect of simplifying a verification flow.

## Claims

1. A method for equipment control, applied to control equipment, the method **characterized by** comprising:
receiving a page access request from visitor equipment, the page access request being used for requesting to access a verification page; and
generating and sending a predetermined page used for reorientation to the visitor equipment, the predetermined page comprising a second ID of the control
equipment and a starting link and the starting link being used to start a client;
receiving a first Identifier, ID, of the visitor equipment, a visitor account and the second ID of the control equipment from the client, the client being installed in the visitor equipment (101);
acquiring a manager account associated with the second ID(102); and
when it is determined that a predetermined relationship is satisfied between the visitor account and the manager account, determining that the visitor equipment has a predetermined using permission according to the first ID(103).

2. The method according to claim 1, further comprising:
receiving an ID acquisition request from the visitor equipment, the ID acquisition request being sent when the visitor equipment receives a triggering signal acting on the starting link and the ID acquisition request being used to request for the first ID; and
sending the first ID to the visitor equipment, the visitor equipment being configured to send the first ID and the second ID to the client and the client being configured to receive the first ID and the second ID and read the visitor account which logs in the client.

3. The method according to any one of claims 1-2, further comprising:
when it is determined that the predetermined relationship is not satisfied between the visitor account and the manager account, acquiring at least one other visitor account of at least one other piece of visitor equipment currently having the predetermined using permission;
detecting whether the predetermined relationship is satisfied between at least one other visitor account and the visitor account or not; and
when the predetermined relationship is satisfied between at least one other visitor account and the visitor account, determining that the visitor equipment has the predetermined using permission according to the first ID.

4. The method according to claim 3, further comprising:
when the predetermined relationship is not satisfied between any other visitor account and the visitor account, determining that the visitor equipment does not have the predetermined using permission according to the first ID.

5. A method for equipment control, applied to visitor equipment, the method **characterized by** comprising:
sending a page access request to control equipment, the page access request being used for requesting to access a verification page; and
receiving a predetermined page used for reorientation from the control equipment, the verification page comprising a second ID of the control equipment and a starting link and the starting link being used to start a client;
acquiring a first Identifier, ID, of the visitor equipment and the second ID of the control equipment(201);
sending the first ID, the second ID and a visitor account of the visitor equipment to the control equipment through the client, the client being installed in the visitor equipment (202); and
determining that the control equipment has a predetermined using permission, the control equipment being configured to acquire a manager account associated with the second ID and determine that the visitor equipment has the predetermined using permission according to the first ID when it is determined that a predetermined relationship is satisfied between the visitor account and the manager account(203).

6. The method according to claim 5, further comprising:
when a triggering signal acting on the starting link is received, sending an ID acquisition request to the control equipment;
receiving the first ID from the control equipment; and
sending the first ID and the second ID to the client, the client being configured to receive the first ID and the second ID and read the visitor account which logs in the client.

7. The method according to any one of claims 5-6, further comprising:
determining that the control equipment has the predetermined using permission, the control equipment being configured to acquire at least one other visitor account of at least one other piece of visitor equipment currently having the predetermined using permission when it is determined that the predetermined relationship is not satisfied between the visitor account and the manager account and determine that the visitor equipment has the predetermined using permission according to the first ID when it is determined that the predetermined relationship is satisfied between at least one other visitor account and the visitor account.

8. The method according to claim 7, further comprising:
determining that the control equipment does not have the predetermined using permission, the control equipment being configured to determine that the visitor equipment does not have the predetermined using permission according to the first ID when it is determined that the predetermined relationship is not satisfied between any other visitor account and the visitor account.

9. A device for equipment control, applied to control equipment, **characterized in that** the device comprises:
a first receiving module (410), configured to receive a first Identifier, ID, of visitor equipment, a visitor account and a second ID of the control equipment from a client, the client being installed in the visitor equipment;
a first acquisition module (420), configured to acquire a manager account associated with the second ID received by the first receiving module; and
a first determination module (430), configured to, when it is determined that a predetermined relationship is satisfied between the visitor account and the manager account acquired by the first acquisition module, determine that the visitor equipment has a predetermined using permission according to the first ID;
a second receiving module (540), configured to receive a page access request from the visitor equipment, the page access request being used for requesting to access a verification page; and
a page generation module (550), configured to generate and send a predetermined page used for reorientation to the visitor equipment, the predetermined page including the second ID and a starting link and the starting link being used to start the client.

10. A device for equipment control, applied to visitor equipment, **characterized in that** the device comprises:
an Identifier, ID, acquisition module(610), configured to acquire a first ID of the visitor equipment and a second ID of control equipment;
a first sending module(620), configured to send the first ID and the second ID which are acquired by the ID acquisition module and a visitor account of the visitor equipment to the control equipment through a client, the client being installed in the visitor equipment; and
a first determination module (630), configured to determine that the control equipment has a predetermined using permission, the control equipment being configured to acquire a manager account associated with the second ID and determine that the visitor equipment has the predetermined using permission according to the first ID when it is determined that a predetermined relationship is satisfied between the visitor account and the manager account;
a second sending module (740), configured to send a page access request to the control equipment, the page access request being used for requesting to access a verification page; and
a page receiving module (750), configured to receive a predetermined page used for reorientation from the control equipment, the predetermined page including the second ID and a starting link and the starting link being used to start the client.

11. A computer program including instructions for executing the steps of a method for equipment control according to any one of claims 1 to 4 and the steps of a method for equipment control according to any one of claims 5 to 8 when said program is executed by a computer.

12. A recording medium readable by a computer and having recorded thereon a computer program including instructions for executing the steps of a method for equipment control according to any one of claims 1 to 4 and the steps of a method for equipment control according to any one of claims 5 to 8.

## Patentansprüche

1. Verfahren zur Ausrüstungssteuerung, angewendet auf Steuerausrüstung, wobei das Verfahren **dadurch gekennzeichnet ist, dass** es umfasst:
Empfangen einer Seitenzugriffsanforderung von Besucherausrüstung, wobei die Seitenzugriffsanforderung zum Anfordern von Zugriff auf eine Verifizierungsseite verwendet wird; und
Erzeugen und Senden einer vorbestimmten Seite, die zur Neuausrichtung verwendet wird, an die Besucherausrüstung, wobei die vorbestimmte Seite eine zweite ID der Steuerausrüstung und eine Startverknüpfung umfasst und die Startverknüpfung verwendet wird, um einen Client zu starten;
Empfangen einer ersten Kennung, ID, der Besucherausrüstung, eines Besucherkontos und der zweiten ID der Steuerausrüstung von dem Client, wobei der Client auf der Besucherausrüstung installiert ist (101);
Erwerben eines der zweiten ID zugeordneten Verwalterkontos (102); und
wenn es bestimmt wird, dass eine vorbestimmte Beziehung zwischen dem Besucherkonto und dem Verwalterkonto erfüllt ist, Bestimmen, dass die Besucherausrüstung eine vorbestimmte Verwendungserlaubnis nach der ersten ID aufweist (103).

2. Verfahren nach Anspruch 1, weiter umfassend:
Empfangen einer ID-Erwerbungsanforderung von der Besucherausrüstung, wobei die ID-Erwerbungsanforderung gesendet wird, wenn die Besucherausrüstung ein Auslösesignal empfängt, das auf die Startverknüpfung wirkt, und die ID-Erwerbungsanforderung verwendet wird, um die erste ID anzufordern; und
Senden der ersten ID an die Besucherausrüstung, wobei die Besucherausrüstung dafür konfiguriert ist, die erste ID und die zweite ID an den Client zu senden und der Client dafür konfiguriert ist, die erste ID und die zweite ID zu empfangen und das Besucherkonto zu lesen, das sich in dem Client anmeldet.

3. Verfahren nach einem der Ansprüche 1-2, weiter umfassend:
wenn es bestimmt wird, dass die vorbestimmte Beziehung zwischen dem Besucherkonto und dem Verwalterkonto nicht erfüllt ist, Erwerben mindestens eines anderen Besucherkontos von mindestens einem anderen Stück von Besucherausrüstung, das gegenwärtig die vorgegebene Verwendungserlaubnis aufweist;
Erfassen, ob die vorbestimmte Beziehung zwischen mindestens einem anderen Besucherkonto und dem Besucherkonto erfüllt ist oder nicht; und
wenn die vorgegebene Beziehung zwischen mindestens einem anderen Besucherkonto und dem Besucherkonto erfüllt ist, Bestimmen, dass die Besucherausrüstung die vorbestimmte Verwendungserlaubnis nach der ersten ID aufweist.

4. Verfahren nach Anspruch 3, weiter umfassend:
wenn die vorbestimmte Beziehung zwischen jeglichem anderen Besucherkonto und dem Besucherkonto nicht erfüllt ist, Bestimmen, dass die Besucherausrüstung nicht die vorbestimmte Verwendungserlaubnis nach der ersten ID aufweist.

5. Verfahren zur Ausrüstungssteuerung, angewendet auf Besucherausrüstung, wobei das Verfahren **dadurch gekennzeichnet ist, dass** es umfasst:
Senden einer Seitenzugriffsanforderung an Steuerausrüstung, wobei die Seitenzugriffsanforderung zum Anfordern von Zugriff auf eine Verifizierungsseite verwendet wird; und
Empfangen einer vorbestimmten Seite, die zur Neuausrichtung verwendet wird, von der Steuerausrüstung, wobei die Verifizierungsseite eine zweite ID der Steuerausrüstung und eine Startverknüpfung umfasst und die Startverknüpfung verwendet wird, um einen Client zu starten;
Erwerben einer ersten Kennung, ID, der Besucherausrüstung und der zweiten ID der Steuerausrüstung (201);
Senden der ersten ID, der zweiten ID und eines Besucherkontos der Besucherausrüstung an das Steuergerät durch den Client, wobei der Client auf der Besucherausrüstung installiert ist (202); und
Bestimmen, dass die Steuerausrüstung eine vorbestimmte Verwendungserlaubnis aufweist, wobei die Steuerausrüstung dafür konfiguriert ist, ein der zweiten ID zugeordnetes Verwalterkonto zu erwerben und zu bestimmen, dass die Besucherausrüstung die vorbestimmte Verwendungserlaubnis nach der ersten ID aufweist, wenn es bestimmt wird, dass eine vorbestimmte Beziehung zwischen dem Besucherkonto und dem Verwalterkonto erfüllt ist (203).

6. Verfahren nach Anspruch 5, weiter umfassend:
wenn ein Auslösesignal empfangen wird, das auf die Startverknüpfung wirkt, Senden einer ID-Erwerbungsanforderung an die Steuerausrüstung;
Empfangen der ersten ID von der Steuerausrüstung; und
Senden der ersten ID und der zweiten ID an den Client, wobei der Client dafür konfiguriert ist, die erste ID und die zweite ID zu empfangen und das Besucherkonto zu lesen, das sich in dem Client anmeldet.

7. Verfahren nach einem der Ansprüche 5-6, weiter umfassend:
Bestimmen, dass die Steuerausrüstung die vorbestimmte Verwendungserlaubnis aufweist, wobei die Steuerausrüstung dafür konfiguriert ist, mindestens ein anderes Besucherkonto von mindestens einem anderen Stück von Besucherausrüstung, das gegenwärtig die vorbestimmte Verwendungserlaubnis aufweist, zu erwerben, wenn es bestimmt wird, dass die vorbestimmte Beziehung zwischen dem Besucherkonto und dem Verwalterkonto nicht erfüllt ist, und zu bestimmen, dass die Besucherausrüstung die vorbestimmte Verwendungserlaubnis nach der ersten ID aufweist, wenn es bestimmt wird, dass die vorbestimmte Beziehung zwischen mindestens einem anderen Besucherkonto und dem Besucherkonto erfüllt ist.

8. Verfahren nach Anspruch 7, weiter umfassend:
Bestimmen, dass die Steuerausrüstung nicht die vorbestimmte Verwendungserlaubnis aufweist, wobei die Steuerausrüstung konfiguriert ist, zu bestimmen, dass die Besucherausrüstung nicht die vorbestimmte Verwendungserlaubnis nach der ersten ID aufweist, wenn es bestimmt wird, dass die vorbestimmte Beziehung zwischen jeglichem anderen Besucherkonto und dem Besucherkonto nicht erfüllt ist.

9. Vorrichtung zur Ausrüstungssteuerung, angewendet auf Steuerausrüstung, **dadurch gekennzeichnet, dass** die Vorrichtung umfasst:
ein erstes Empfangsmodul (410), das dafür konfiguriert ist, eine erste Kennung, ID, von Besucherausrüstung, ein Besucherkonto und eine zweite ID der Steuerausrüstung von einem Client zu empfangen, wobei der Client auf der Besucherausrüstung installiert ist;
ein erstes Erwerbungsmodul (420), das dafür konfiguriert ist, ein der zweiten ID, die durch das erste Empfangsmodul empfangen wurde, zugeordnetes Verwalterkonto zu erwerben; und
ein erstes Bestimmungsmodul (430), das dafür konfiguriert ist, wenn es bestimmt wird, dass eine vorbestimmte Beziehung zwischen dem Besucherkonto und dem Verwalterkonto, das durch das erste Erwerbungsmodul erworben wurde, erfüllt ist, zu bestimmen, dass die Besucherausrüstung eine vorbestimmte Verwendungserlaubnis nach der ersten ID aufweist;
ein zweites Empfangsmodul (540), das dafür konfiguriert ist, eine Seitenzugriffsanforderung von der Besucherausrüstung zu empfangen, wobei die Seitenzugriffsanforderung zum Anfordern von Zugriff auf eine Verifizierungsseite verwendet wird; und
ein Seitenerzeugungsmodul (550), das dafür konfiguriert ist, eine vorbestimmte Seite, die zur Neuausrichtung verwendet wird, zu erzeugen und an die Besucherausrüstung zu senden, wobei die vorbestimmte Seite die zweite ID und einen Startverknüpfung einschließt und die Startverknüpfung verwendet wird, um den Client zu starten.

10. Vorrichtung zur Ausrüstungssteuerung, angewendet auf Besucherausrüstung, **dadurch gekennzeichnet, dass** die Vorrichtung umfasst:
ein Kennungs- ,ID-, Erwerbungsmodul (610), das dafür konfiguriert ist, eine erste ID der Besucherausrüstung und eine zweite ID von Steuerausrüstung zu erwerben;
ein erstes Sendemodul (620), das dafür konfiguriert ist, die erste ID und die zweite ID, die durch das ID-Erwerbungsmodul erworben werden, und ein Besucherkonto der Besucherausrüstung an die Steuerausrüstung durch einen Client zu senden, wobei der Client auf der Besucherausrüstung installiert ist; und
ein erstes Bestimmungsmodul (630), das dafür konfiguriert ist, zu bestimmen, dass die Steuerausrüstung eine vorbestimmte Verwendungserlaubnis aufweist, wobei die Steuerausrüstung dafür konfiguriert ist, ein der zweiten ID zugeordnetes Verwalterkonto zu erwerben und zu bestimmen, dass die Besucherausrüstung die vorbestimmte Verwendungserlaubnis nach der ersten ID aufweist, wenn es bestimmt wird, dass eine vorbestimmte Beziehung zwischen dem Besucherkonto und dem Verwalterkonto erfüllt ist;
ein zweites Sendemodul (740), das dafür konfiguriert ist, eine Seitenzugriffsanforderung an die Steuerausrüstung zu senden, wobei die Seitenzugriffsanforderung zum Anfordern von Zugriff auf eine Verifizierungsseite verwendet wird; und
ein Seitenempfangsmodul (750), das dafür konfiguriert ist, eine vorbestimmte Seite, die zur Neuausrichtung verwendet wird, von der Steuerausrüstung zu empfangen, wobei die vorbestimmte Seite die zweite ID und eine Startverknüpfung einschließt und die Startverknüpfung verwendet wird, um den Client zu starten.

11. Computerprogramm, das Anweisungen zum Ausführen der Schritte eines Verfahrens zur Ausrüstungssteuerung nach einem der Ansprüche 1 bis 4 und der Schritte eines Verfahrens zur Ausrüstungssteuerung nach einem der Ansprüche 5 bis 8, wenn das Programm durch einen Computer ausgeführt wird, umfasst.

12. Aufzeichnungsmedium, das durch einen Computer lesbar ist und auf dem ein Computerprogramm aufgezeichnet ist, das Anweisungen zum Ausführen der Schritte eines Verfahrens zur Ausrüstungssteuerung nach einem der Ansprüche 1 bis 4 und der Schritte eines Verfahrens zur Ausrüstungssteuerung nach einem der Ansprüche 5 bis 8 einschließt.

## Revendications

1. Procédé de commande d'équipement, appliqué à un équipement de commande, le procédé étant **caractérisé en ce qu'**il comprend :
la réception d'une demande d'accès de page à partir d'un équipement visiteur, la demande d'accès de page étant utilisée pour demander l'accès à une page de vérification ; et
la génération et l'envoi d'une page prédéterminée utilisée pour la réorientation à l'équipement visiteur, la page prédéterminée comprenant un second ID de l'équipement de commande et un lien de démarrage et le lien de démarrage étant utilisé pour démarrer un client ;
la réception d'un premier identificateur, ID, de l'équipement visiteur, d'un compte visiteur et du second ID de l'équipement de commande à partir du client, le client étant installé dans l'équipement visiteur (101) ;
l'acquisition d'un compte gestionnaire associé au second ID (102) ; et
quand il est déterminé qu'une relation prédéterminée est satisfaite entre le compte visiteur et le compte gestionnaire, la détermination que l'équipement visiteur a une permission d'utilisation prédéterminée en fonction du premier ID (103).

2. Procédé selon la revendication 1, comprenant en outre :
la réception d'une demande d'acquisition d'ID à partir de l'équipement visiteur, la demande d'acquisition d'ID étant envoyée quand l'équipement visiteur reçoit un signal de déclenchement agissant sur le lien de démarrage et la demande d'acquisition d'ID étant utilisée pour demander le premier ID ; et
l'envoi du premier ID à l'équipement visiteur, l'équipement visiteur étant configuré pour envoyer le premier ID et le second ID au client et le client étant configuré pour recevoir le premier ID et le second ID et lire le compte visiteur qu'il journalise dans le client.

3. Procédé selon l'une quelconque des revendications 1 et 2, comprenant en outre :
quand il est déterminé que la relation prédéterminée n'est pas satisfaite entre le compte visiteur et le compte gestionnaire, l'acquisition d'au moins un autre compte visiteur d'au moins un autre élément d'équipement visiteur ayant actuellement la permission d'utilisation prédéterminée ;
la détection si la relation prédéterminée est ou non satisfaite entre au moins un autre compte visiteur et le compte visiteur ; et
quand la relation prédéterminée est satisfaite entre au moins un autre compte visiteur et le compte visiteur, la détermination que l'équipement visiteur a la permission d'utilisation prédéterminée en fonction du premier ID.

4. Procédé selon la revendication 3, comprenant en outre :
quand la relation prédéterminée n'est pas satisfaite entre n'importe quel autre compte visiteur et le compte visiteur, la détermination que l'équipement visiteur n'a pas la permission d'utilisation prédéterminée en fonction du premier ID.

5. Procédé de commande d'équipement, appliqué à un équipement visiteur, le procédé étant **caractérisé en ce qu'**il comprend :
l'envoi d'une demande d'accès de page à un équipement de commande, la demande d'accès de page étant utilisée pour demander l'accès à une page de vérification ; et
la réception d'une page prédéterminée utilisée pour la réorientation à partir de l'équipement de commande, la page de vérification comprenant un second ID de l'équipement de commande et un lien de démarrage et le lien de démarrage étant utilisé pour démarrer un client ;
l'acquisition d'un premier identificateur, ID, de l'équipement visiteur et du second ID de l'équipement de commande (201) ;
l'envoi du premier ID, du second ID et d'un compte visiteur de l'équipement visiteur à l'équipement de commande par l'intermédiaire du client, le client étant installé dans l'équipement visiteur (202) ; et
la détermination que l'équipement de commande a une permission d'utilisation prédéterminée, l'équipement de commande étant configuré pour acquérir un compte gestionnaire associé au second ID et déterminer que l'équipement visiteur a la permission d'utilisation prédéterminée en fonction du premier ID quand il est déterminé qu'une relation prédéterminée est satisfaite entre le compte visiteur et le compte gestionnaire (203).

6. Procédé selon la revendication 5, comprenant en outre :
quand un signal de déclenchement agissant sur le lien de démarrage est reçu, l'envoi d'une demande d'acquisition d'ID à l'équipement de commande ;
la réception du premier ID à partir de l'équipement de commande ; et
l'envoi du premier ID et du second ID au client, le client étant configuré pour recevoir le premier ID et le second ID et lire le compte visiteur qu'il journalise dans le client.

7. Procédé selon l'une quelconque des revendications 5 et 6, comprenant en outre :
la détermination que l'équipement de commande a la permission d'utilisation prédéterminée, l'équipement de commande étant configuré pour acquérir au moins un autre compte visiteur d'au moins un autre élément d'équipement visiteur ayant actuellement la permission d'utilisation prédéterminée quand il est déterminé que la relation prédéterminée n'est pas satisfaite entre le compte visiteur et le compte gestionnaire et déterminer que l'équipement visiteur a la permission d'utilisation prédéterminée en fonction du premier ID quand il est déterminé que la relation prédéterminée est satisfaite entre au moins un autre compte visiteur et le compte visiteur.

8. Procédé selon la revendication 7, comprenant en outre :
la détermination que l'équipement de commande n'a pas la permission d'utilisation prédéterminée, l'équipement de commande étant configuré pour déterminer que l'équipement visiteur n'a pas la permission d'utilisation prédéterminée en fonction du premier ID quand il est déterminé que la relation prédéterminée n'est pas satisfaite entre n'importe quel autre compte visiteur et le compte visiteur.

9. Dispositif de commande d'équipement, appliqué à un équipement de commande, **caractérisé en ce que** le dispositif comprend :
un premier module de réception (410) configuré pour recevoir un premier identificateur, ID, de l'équipement visiteur, un compte visiteur et un second ID de l'équipement de commande à partir d'un client, le client étant installé dans l'équipement visiteur ;
un premier module d'acquisition (420) configuré pour acquérir un compte gestionnaire associé au second ID reçu par le premier module de réception ; et
un premier module de détermination (430) configuré pour, quand il est déterminé qu'une relation prédéterminée est satisfaite entre le compte visiteur et le compte gestionnaire acquis par le premier module d'acquisition, déterminer que l'équipement visiteur a une permission d'utilisation prédéterminée en fonction du premier ID ;
un second module de réception (540) configuré pour recevoir une demande d'accès de page à partir de l'équipement visiteur, la demande d'accès de page étant utilisée pour demander l'accès à une page de vérification ; et
un module de génération de page (550) configuré pour générer et envoyer une page prédéterminée utilisée pour la réorientation à l'équipement utilisateur, la page prédéterminée comprenant le second ID et un lien de démarrage et le lien de démarrage étant utilisé pour démarrer le client.

10. Dispositif de commande d'équipement, appliqué à un équipement visiteur, **caractérisé en ce que** le dispositif comprend :
un module d'acquisition d'identificateur, ID, (610) configuré pour acquérir un premier identificateur, ID, de l'équipement visiteur et un second ID d'un équipement de commande ;
un premier module d'envoi (620) configuré pour envoyer le premier ID et le second ID qui sont acquis par le module d'acquisition d'ID et un compte visiteur de l'équipement visiteur à l'équipement de commande par l'intermédiaire d'un client, le client étant installé dans l'équipement visiteur ; et
un premier module de détermination (630) configuré pour déterminer que l'équipement de commande a une permission d'utilisation prédéterminée, l'équipement de commande étant configuré pour acquérir un compte gestionnaire associé au second ID et déterminer que l'équipement visiteur a la permission d'utilisation prédéterminée en fonction du premier ID quand il est déterminé qu'une relation prédéterminée est satisfaite entre le compte visiteur et le compte gestionnaire ;
un second module d'envoi (740) configuré pour envoyer une demande d'accès de page à l'équipement de commande, la demande d'accès de page étant utilisée pour demander l'accès à une page de vérification ; et
un module de réception (750) configuré pour recevoir une page prédéterminée utilisée pour la réorientation à partir de l'équipement de commande, la page prédéterminée comprenant le second ID et un lien de démarrage et le lien de démarrage étant utilisé pour démarrer le client.

11. Programme informatique comprenant des instructions pour exécuter les étapes d'un procédé de commande d'équipement selon l'une quelconque des revendications 1 à 4 et les étapes d'un procédé de commande d'équipement selon l'une quelconque des revendications 5 à 8 quand ledit programme est exécuté par un ordinateur.

12. Support d'enregistrement lisible par un ordinateur et ayant enregistré dessus un programme informatique comprenant des instructions pour exécuter les étapes d'un procédé de commande d'équipement selon l'une quelconque des revendications 1 à 4 et les étapes d'un procédé de commande d'équipement selon l'une quelconque des revendications 5 à 8.
